# EUROPEAN PATENT APPLICATION

(11) **EP 4 152 703 A1**
(43) Date of publication of application: **22.03.2023**
(21) Application number: 21803432.0
(22) Date of filing: 07.05.2021
(51) Int. Cl.: H04L 12/751, H04L 12/721, H04L 12/725, H04L 12/911

(54) **NETWORK CONTROL METHOD AND DEVICE**

(30) Priority: 15.05.2020 CN 202010415264
(71) Applicant: Datang Mobile Communications Equipment Co., Ltd., Beijing 100085 (CN)
(72) Inventor: WANG, Fenghua, Beijing 100085 (CN); XU, Hui, Beijing 100085 (CN); HOU, Yunjing, Beijing 100085 (CN); QIN, Chen, Beijing 100085 (CN)
(74) Representative: Maiwald GmbH
(86) International application number: PCT/CN2021/092099
(87) International publication number: WO 2021/227947

(57) **Abstract**

Embodiments of the present disclosure provide a network control method and device. The method includes: sending an operation status parameter of the network node to a control device, thereby enabling the control device to update a network topology and a resource view according to the operation status parameter of the network node.

## Description

### CROSS-REFERENCE TO RELATED APPLICATION

This application claims the priority of Chinese Application No. 202010415264.9, filed on May 15, 2020, the disclosure of which is incorporated in its entirety by reference herein.

### TECHNICAL FIELD

Embodiments of the present disclosure relates to the field of communication technologies, and in particular to a network control method and device.

### BACKGROUND

The DetNet working group of the Internet Engineering Task Force (IETF) currently focuses on the overall architecture, data platform specifications, data flow information model, and YANG model; however, no new specifications are proposed for network control, and the related architecture and control of SDN in IETF RFC7426 are followed. Specifically, a control plane collects topology of a network system, and a management plane monitors faults and real-time information of network devices; and the control plane calculates paths and generates flow tables according to the topology of the network system and information from the management plane. However, resource occupation is not considered in the foregoing whole process, which cannot ensure deterministic performances such as zero packet loss, zero jitter, low delay.

### SUMMARY

An object of embodiments of the present disclosure is to provide a network control method and device, which solves the problem that deterministic performance such as zero packet loss, zero jitter, and low delay cannot be guaranteed because resource occupation is not considered.

One embodiment of the present disclosure provides a network control method, performed by a network node, including:
sending an operation status parameter of the network node to a control device, thereby enabling the control device to update a network topology and a resource view according to the operation status parameter of the network node.

Optionally, the operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, and remaining allocated buffer.

Optionally, the sending an operation status parameter of the network node to a control device, includes: sending the operation status parameter of the network node to the control device through a periodic heartbeat message.

Optionally, the method further includes: after receiving a flow table from the control device, updating the flow table according to a service level of a data flow, inserting or deleting a forwarding path of the data flow in the flow table of a relevant level, thereby obtaining an execution result of a level-classifying flow table; and notifying the control device of the execution result of the level-classifying flow table.

Optionally, the method further includes: after receiving resource reservation information from the control device, performing resource reservation or cancellation according to a flow identifier, thereby obtaining an execution result of the resource reservation; and notifying the control device of the execution result of resource reservation.

Optionally, the method further includes: after receiving a data flow from a data source device, selecting a flow table according to a level of the data flow, and performing matching; and performing resource reservation at the network node, according to a flow identifier of the data flow.

Optionally, before the selecting a flow table according to a level of the data flow, and performing matching, the method further includes:
according to the flow identifier and/or flow type of the data flow, judging whether copying is required;
if copying is required, copying each packet of the data flow to form a plurality of data flows, and transferring to the flow table for matching;
if copying is not required, directly transferring to the flow table for matching.

Optionally, the method further includes:
judging whether the network node is a last hop;
if the network node is the last hop, analyzing whether there is a duplicate packet according to packet sequence indexes in the flow identifier, and if there is a duplicate packet, deleting the duplicate packet;
analyzing arrival time of the data flow according to the flow type, setting a sending timer according to a timestamp;
if the sending timer expires, sending the data flow to a next hop.

In a second aspect, one embodiment of the present disclosure provides a network control method, performed by a control device, including:
obtaining an operation status parameter of a network node; and
updating a network topology and a resource view according to the operation status parameter of the network node.

Optionally, the operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, and remaining allocated buffer.

Optionally, the obtaining an operation status parameter of a network node, includes: receiving a periodic heartbeat message sent by the network node, wherein the periodic heartbeat message carries the operation status parameter of the network node.

Optionally, the method further includes:
receiving a first message from an application device, wherein the first message requests for service analysis;
generating a flow table according to the first message; and
sending the flow table to the network node.

Optionally, the first message includes one or more of the following: source end information, destination end information, data flow information, service application type and service application category identifier.

Optionally, the generating a flow table according to the first message, includes:
identifying, by a service analysis module, a service application type of the application device according to the first message;
if the service application type is an application resource, sending, by the service analysis module, a second message to a path calculation module;
according to the second message, obtaining, by the path calculation module, from a topology management module, the network topology and resource view as well as reservation resources of the network node;
according to the network topology and resource view as well as reservation resources of the network node, performing, by the path calculation module, path calculation, and estimation of an end-to-end delay of each path;
sending, by the path calculation module, to a resource calculation module, a path set of paths less than a maximum delay of the data flow;
obtaining, by the resource calculation module, from the topology management module, the network topology and resource view as well as reservation resources of the network node, performing resource estimation on the paths in the path set, and selecting paths that meet resource requirements, and sending information of the selected paths to a flow table generation module; and
generating, by the flow table generation module, the flow table according to the information of the selected paths.

Optionally, the method further includes:
if there is no path that meets the resource requirements, notifying, by the path calculation module, the service analysis module of a result that there is no path that meets the resource requirements; and
feeding back, by the service analysis module, the result to the application device.

Optionally, the method further includes:
receiving, by the service analysis module, a third message from the application device, wherein the third message indicates bearer cancellation and the third message carries a data flow identifier;
notifying, by the service analysis module, the topology management module to release resources related to the data flow identifier, and updating the network topology and resource view;
notifying, by the topology management module, the flow table generation module to delete a flow entry related to the data flow identifier.

Optionally, the sending, by the path calculation module, to a resource calculation module, a path set of paths less than a maximum delay of the data flow, includes:
determining, by the path calculation module, the path set of paths less than the maximum delay of the data flow;
determining, by the path calculation module, difference values between delay of each path in the path set and the maximum delay of the data flow;
sorting, by the path calculation module, paths according to the difference values in ascending order, and sending the paths to the resource calculation module.

Optionally, the sending, by the service analysis module, a second message to a path calculation module, includes:
according to an established service model library block, mapping, by the service analysis module, the service application category identifier to one or more of service peak packet rate, maximum data packet length, end-to-end delay upper limit, packet loss upper limit, and network bandwidth, which are sent to the path calculation module together with one or more of source end, destination end, data flow identifier, service application type, and service application category identifier.

In a third aspect, one embodiment of the present disclosure provides a network node, including:
a sending module configured to send an operation status parameter of the network node to a control device, thereby enabling the control device to update a network topology and a resource view according to the operation status parameter of the network node.

In a fourth aspect, one embodiment of the present disclosure provides a network node, including: a first transceiver and a first processor;
wherein the first transceiver sends and receives data under the control of the first processor;
the first processor reads a program in a memory to execute following operations: sending an operation status parameter of the network node to a control device, thereby enabling the control device to update a network topology and a resource view according to the operation status parameter of the network node.

In a fifth aspect, one embodiment of the present disclosure provides a control device, including:
an obtaining module configured to obtain an operation status parameter of a network node; and
an update module configured to update a network topology and a resource view according to the operation status parameter of the network node.

In a sixth aspect, one embodiment of the present disclosure provides a control device, including: a second transceiver and a second processor;
wherein the second transceiver sends and receives data under the control of the second processor;
the second processor reads a program in a memory to execute following operations: obtaining an operation status parameter of a network node; and updating a network topology and a resource view according to the operation status parameter of the network node.

In a seventh aspect, one embodiment of the present disclosure provides a communication device, including: a processor, a memory, and a program stored on the memory and executable on the processor; wherein the processor executes the program to perform steps of the method according to the first aspect or the second aspect.

In an eighth aspect, one embodiment of the present disclosure provides a computer-readable storage medium, including a program stored thereon; wherein the program is executed by a processor to perform steps of the method according to the first aspect or the second aspect.

In the embodiments of the present disclosure, through centralized control, the topology and resources of the entire network can be clearly understood and more reasonable path and resource reservation decisions can be made.

### BRIEF DESCRIPTION OF THE DRAWINGS

A person of ordinary skill in the art would clearly understand various advantages and benefits of the embodiments of present disclosure by reading detail description of optional implementations set forth below. The drawings are only for the purpose of illustrating the optional implementations, rather than a limitation on the present disclosure. Same reference characters designate same parts throughout the drawings. In the drawings:
FIG. 1 is an SDN architecture diagram;
FIG. 2 is a schematic diagram of TSN in IEEE802.1 standard framework;
FIG. 3 is a first flowchart of a network control method according to an embodiment of the present disclosure;
FIG. 4 is a second flowchart of a network control method according to an embodiment of the present disclosure;
FIG. 5 is a schematic diagram of a system architecture according to an embodiment of the present disclosure;
FIG. 6 is a schematic diagram of a network management process according to an embodiment of the present disclosure;
FIG. 7 is a schematic diagram of a network control process according to an embodiment of the present disclosure;
FIG. 8 is a schematic diagram of a resource reservation process according to an embodiment of the present disclosure;
FIG. 9 is a schematic diagram of a data processing process according to an embodiment of the present disclosure;
FIG. 10 is a first schematic diagram of a network node according to an embodiment of the present disclosure;
FIG. 11 is a second schematic diagram of a network node according to an embodiment of the present disclosure;
FIG. 12 is a first schematic diagram of a control device according to an embodiment of the present disclosure;
FIG. 13 is a second schematic diagram of a control device according to an embodiment of the present disclosure; and
FIG. 14 is a schematic diagram of a communication device according to an embodiment of the present disclosure.

### DETAILED DESCRIPTION

In order to facilitate understanding of embodiments of the present disclosure, the following technical points are first introduced.
1) Time-Sensitive Networking (TSN)
   The TSN uses standard Ethernet to provide distributed time synchronization and deterministic communication. The essence of the standard Ethernet is a non-deterministic network, but in the industrial field, determinism must be required, and a group of data packets must arrive at a destination in a complete, real-time, and deterministic manner. Therefore, the new TSN standard maintains time synchronization of all network devices, adopts central control and performs slot planning, reservation and fault-tolerance protection at data link layer to achieve determinism. The TSN includes three basic components: time synchronization, communication path selection, reservation and fault-tolerance, and scheduling and traffic shaping.
   √ Time synchronization: the time in the TSN network is transmitted from a central time source to an Ethernet device through the network itself, and high-frequency round-trip delay measurements are used to maintain high-precision time synchronization between the network device and a central clock source. That is, the precision time protocol of IEEE1588.
   √ Communication path selection, reservation and fault-tolerance: the TSN calculates paths through the network according to the network topology, provides explicit path control and bandwidth reservation for data streams, and provides redundant transmission for the data streams according to the network topology.
   √ Scheduling and traffic shaping: a time aware queue in the TSN enables TSN switches to control queued traffic through a time aware shaper (TAS), and Ethernet frames are identified and assigned to a priority-based virtual local area network (VLAN) tag, and each queue is defined in a schedule and then data packets of these queues are then transmitted at an egress during a predetermined time window; other queues will be locked in a specified time window. Thus, the effect of periodic data being affected by aperiodic data is eliminated. This means that latency of each switch is deterministic and knowable, and the data packet delay in the TSN network is guaranteed.
2) Deterministic Networking (DetNet)

The goal of the DetNet network is to achieve deterministic transmission paths on second layer bridging and third layer routing segment, and these paths can provide worst-case bounds on delay, packet loss, and jitter, and techniques to control and reduce end-to-end latency. The DetNet extends the technology developed by TSN from the data link layer to routing.

The DetNet working group of the Internet Engineering Task Force (IETF) currently focuses on the overall architecture, data platform specifications, data flow information model, and YANG model; however, no new specifications are proposed for network control, and control of (software defined network) SDN in IETF RFC7426 are followed.

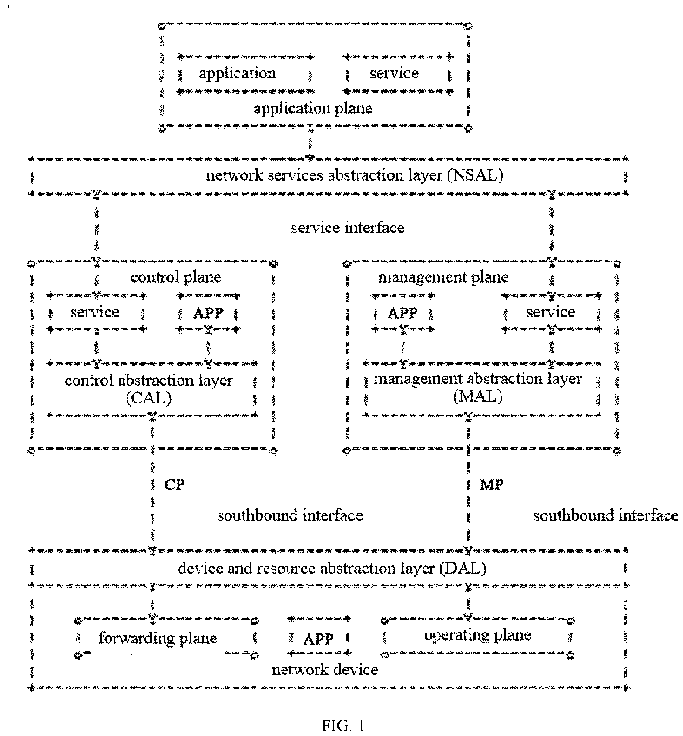

Refer to FIG. 1, it is an SDN architecture diagram and illustrate relevant modules and interactive working principles. According to the SDN architecture, the network is divided into different planes according to service functions. The planes from top to bottom are introduced as follows.
√ Application plane refers to a plane where applications and services that define network behavior are located.
√ Control plane determines how one or more network devices forward data packets, and sends these decisions to network devices in the form of flow tables for execution. Here, the control plane mainly interacts with a forwarding plane and pays less attention to an operational plane of devices, unless the control plane desires to know a current state and function of a specific port.
√ Management plane is responsible for monitoring, configuring and maintaining network devices, for example, making decisions on status of network devices. The management plane mainly interacts with the operational plane of the devices.
√ Forwarding plane is a functional module of the network device responsible for processing packets in data paths according to instructions received from the control plane. Operations of the forwarding plane include, but are not limited to, forwarding, dropping, and modifying data packets.
√ Operational plane is responsible for managing an operating status of the network device where it is located, for example, whether the device is active or inactive, the number of available ports, and a status of each port. The operational plane is responsible for resources of the network device, such as ports, memory.

Therefore, in the previous SDN network, when receiving a request for data packets to be forwarded from the application plane or forwarding plane, the control plane performs routing calculations based on a formed network topology, generates a flow table, and delivers it to the forwarding plane of the device. The specific operation principle of the forwarding plane is as follows.
V Matching flow table: taking a header field as a matching field, including an ingress port, source media access control (MAC), virtual local area network ID (VLANID), internet protocol (IP) address, etc.; matching table entries of a locally stored flow table in sequence according to priorities, and taking a matched table entry with a highest priority as a matching result. Multi-stages flow tables can reduce overhead; by extracting flow table features, the matching process may be divided into several steps, thereby forming a pipeline processing form and reducing the number of flow table records. The forwarding rules are organized in different flow tables. The rules in the same flow table are matched according to priorities. After jumping from small to large in order and updating statistical data, instruction set multi-flow table pipeline processing architecture can be modifies and executed. Although the number of flow entries can be reduced, the matching delay increases. Meanwhile, complexity of algorithms of data flow generation and maintenance is improved.
v Instruction execution: taking instructions of the matched flow entry as a forwarding execution set, which is initially an empty set; for each match, adding one item to the forwarding execution set, and continuously accumulating by multiple actions, until there is no go to table, stopping to execute the set of instructions together. The instructions include forward, drop, enqueue, modify-field, etc. The forward can specify ports, which include physical ports, logical ports, and reserve ports. The modify-field includes processing data packets using a group table, modifying a packet header value, modifying TTL, etc. Different processing combinations will bring different delays.

3) in case that there are multiple end-to-end paths, a sending end measures each path for periodically measuring packet loss, delay, and jitter of each path, and establishes, through periodic accumulation, a pre-estimation model of end-to-end delay and end-to-end packet loss for each path. When each sending end performs packet transmission, a scheduling module estimates according to the pre-estimation model of delay and packet loss, and selects one of the paths according to the shortest delay/minimum packet loss/minimum jitter algorithm as a sending path of this packet.

4) The SDN control device can find a current relatively suitable path for a specific service, generate a flow table for each relevant node and send it to the switch. The data flow is processed node by node according to the flow table to ensure deterministic of end-to-end routing of data flow while ensuring deterministic of the delay.

5) The sender assigns a quality of service (QoS) level to each data flow, which is generally divided into 8 levels. When receiving a packet, the switch checks a level of the packet and inserts the packet into a corresponding queue according to the level. The switch preferentially processes high-priority packets; if the priorities are the same, packets are processed in order of entry. Each packet occupies buffer resources according to the priorities. Due to limited buffer resources in the switch, for example, when a high-priority packet arrives and the BUFFER is already full, the switch will select lowest-priority packets to discard, and assign vacated buffer resources to new incoming high-priority packets, thereby ensuring that the high-priority packet has low delay and low jitter.

6) In the related art, for packet loss, the data plane usually performs retransmission in a way that a receiving end feeds back packet loss and the sending ends performs retransmission, which also increases delay several times the size of the round-trip time (RTT); or, the data plane adds forward error correction (FEC) redundancy in the packet, and performs aggregation encoding and decoding at both ends, which introduces a certain processing delay.

The related art has the following disadvantages.

### 1) TSN technology:

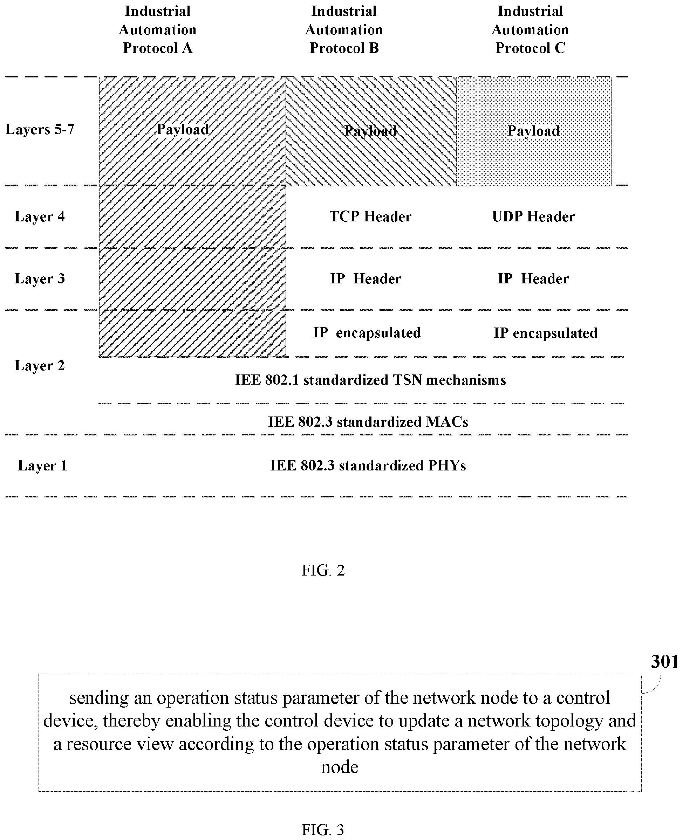

The TSN will provide a universal time-sensitive mechanism for the MAC layer of the Ethernet protocol, which provides possibility of interoperability between networks of different protocols while ensuring time deterministic of Ethernet data communication. Referring to FIG. 2, the TSN does not cover the entire network, and the TSN is only about a second layer in an Ethernet communication protocol model, i.e., a protocol standard of a data link layer (more precisely, an MAC layer). Thus, the TSN only supports bridged networks and does not support end-to-end data flows that require routers.

3) A priority processing method is adopted in the related art, which indeed improves performance of high-priority data streams. However, if a highly time-sensitive data flow is using a link and there is a higher-level data flow in a background traffic or a data flow of the same level sharing the link and switch node resources, whether a certain packet will be lost due to congestion depends heavily on traffic characteristics of the same-level and higher-level data flows that share resources of the switch with the certain packet, then queuing delay in end-to-end delay of the packets in the data flow cannot be determined. The queuing delay of a certain packet depends heavily on traffic characteristics of other data flows that share resources of the switch with the certain packet, and delay jitter of the same packet will be larger. But if priorities are very high, then only new incoming packets can be discarded, which is a main reason for congestion and packet loss. Therefore, the existing technology cannot guarantee that the data flow will not be congested and packet loss will not occur.

4) In the related art, parameters such as end-to-end packet loss rate and delay are monitored through the network, and delay estimation is performed during path selection to expect to arrive at a receiving end according to an expected end-to-end delay. But the parameters measured by the network are cumulative parameters, which represent performance of a certain period of time in the past, and network conditions always change instantaneously. This estimate is inaccurate. Further, a controller in the related art does not calculate resources required by the data stream, and performs maximum resource reservation node by node. Thus, actual transmission performance of the data flow depends heavily on characteristics and levels of the background traffic at that time, so it cannot be guaranteed that the delay of the data flow is lower than a certain value.

5) In the related art, a considerable processing delay is introduced by the packet loss feedback compensation and redundant coding methods, and high time-sensitive data flow applications cannot tolerate long periods of time; nevertheless, in the related art, it is still impossible to guarantee link packet loss.

6) In the related art, a dedicated line method is adopted to ensure absolute low latency and near-zero packet loss, and dynamic sharing of path resources and switch resources cannot be achieved, so time-sensitive services and non-time-sensitive services cannot coexist.

The related technology uses a dedicated line method to ensure absolute low latency and near zero packet loss, but it cannot achieve dynamic sharing of path resources and switch resources, and thus time-sensitive services and non-time-sensitive services cannot coexist.

The technical solutions in the embodiments of the present disclosure are clearly and completely described hereinafter with reference to the accompanying drawings in the embodiments of the present disclosure. It is obvious that the described embodiments are only some of the embodiments of the present disclosure, not all of the embodiments. All other embodiments obtained by a person skilled in the art based on the embodiments of the present disclosure without creative efforts will fall within the scope of the present disclosure.

It is noted that the terms "include" or any other variants thereof used in the description and claims of the present disclosure are intended to encompass a non-exclusive inclusion, such that a process, a method, a system, a product, or a device including a series of elements not only include those elements, but also include other elements that are not explicitly listed, or elements that are inherent to such process, method, product, or device. In addition, "and/or" used in the description and claims of the present disclosure means at least one of connected objects, for example, A and/or B, means that there are three cases including A alone, B alone, and both A and B.

In the embodiments of the present disclosure, the terms such as "exemplary" or "for example" are used to mean serving as an example, illustration, or description. Any embodiments or designs described in the embodiments of the present disclosure as "exemplary" or "for example" should not be construed as preferred or advantageous over other embodiments or designs. Rather, the terms such as "exemplary" or "for example" are intended to present related concepts in a specific manner.

The techniques described herein are not limited to long time evolution (LTE)/LTE-advanced (LTE-A) systems, and may also be applied in various wireless communication systems, such as code division multiple access (CDMA), time division multiple access (TDMA), frequency division multiple access (FDMA), orthogonal frequency division multiple access (OFDMA), single-carrier frequency division multiple access (SC-FDMA) and other systems.

The terms "system" and "network" in the present disclosure may be exchanged for use. The CDMA system may implement radio technologies such as CDMA2000, universal terrestrial radio access (UTRA). The UTRA includes wideband code division multiple access (WCDMA) and other CDMA variants. The TDMA system may implement radio technologies such as global system for mobile communication (GSM). The OFDMA system may implement radio technologies such as ultra-mobile broadband (UMB), Evolution-UTRA (E-UTRA), IEEE 802.11 (Wi-Fi), IEEE 802.16 (WiMAX), IEEE 802.20, and flash-OFDM. The UTRA and E-UTRA are parts of universal mobile telecommunications system (UMTS). LTE and LTE-advanced such as LTE-A are new UMTS releases that use E-UTRA. UTRA, E-UTRA, UMTS, LTE, LTE-A and GSM are described in documents from an organization named "3rd generation partnership project" (3GPP). CDMA2000 and UMB are described in documents from an organization named "3rd generation partnership project 2" (3GPP2). The techniques described herein may be used for both the systems and radio technologies mentioned above, as well as for other systems and radio technologies.

Referring to FIG. 3, one embodiment of the present disclosure provides a network control method, and an execution body of the method is a network node (or referred to as a forwarding device, a switch, etc.). The method includes step 301.

Step 301: sending an operation status parameter of the network node to a control device, thereby enabling the control device to update a network topology and a resource view according to the operation status parameter of the network node.

Optionally, the network node may send the operation status parameter of the network node to the control device through a periodic heartbeat message.

The operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, and remaining allocated buffer.

In some embodiments, the method further includes: after receiving a flow table from the control device, updating the flow table according to a service level of a data flow, inserting or deleting a forwarding path of the data flow in the flow table of a relevant level, thereby obtaining an execution result of a level-classifying flow table; and notifying the control device of the execution result of the level-classifying flow table.

In some embodiments, the method further includes: after receiving resource reservation information from the control device, performing resource reservation or cancellation according to a flow identifier, thereby obtaining an execution result of the resource reservation; and notifying the control device of the execution result of resource reservation.

In some embodiments, the method further includes: after receiving a data flow from a data source device, selecting a flow table according to a level of the data flow, and performing matching; and performing resource reservation at the network node, according to a flow identifier of the data flow.

In some embodiments, before selecting a flow table according to a level of the data flow, and performing matching, the method further includes: according to the flow identifier and/or flow type of the data flow, judging whether copying is required; if copying is required, copying each packet of the data flow to form a plurality of data flows, and transferring to the flow table for matching; if copying is not required, directly transferring to the flow table for matching.

In some embodiments, the method further includes: judging whether the network node is a last hop; if the network node is the last hop, analyzing whether there is a duplicate packet according to packet sequence indexes in the flow identifier, and if there is a duplicate packet, deleting the duplicate packet; analyzing arrival time of the data flow according to the flow type, setting a sending timer according to a timestamp; if the sending timer expires, sending the data flow to a next hop.

In the embodiments of the present disclosure, through centralized control, the topology and resources of the entire network can be clearly understood and more reasonable path and resource reservation decisions can be made. Further, through the resource reservation of network node, it is ensured that the data flow will not be lost due to congestion; through copying and deleting, it is ensured that the data flow is not lost due to the link, thereby ensuring that an end-to-end packet loss rate is almost zero. Further, through resource reservation and path planning, it is ensured that a worst end-to-end delay is not less than a predetermined value. Further, through packet storage, end-to-end delay jitter is eliminated. Further, through resource reservation, a bandwidth reserved for ordinary services can achieve highly reliable services without building a dedicated network.

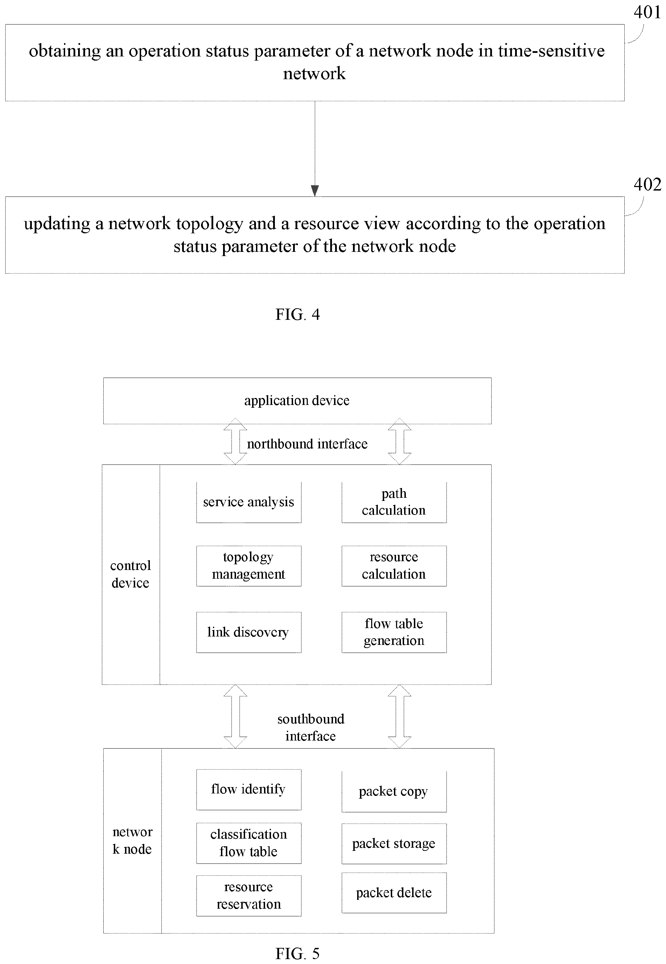

Referring to FIG. 4, one embodiment of the present disclosure provides a network control method. An execution subject of the method may be a control device. The method includes step 401 and step 402.

Step 401: obtaining an operation status parameter of a network node.

For example, a periodic heartbeat message sent by the network node is received, where the periodic heartbeat message carries the operation status parameter of the network node.

The operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, or remaining allocated buffer.

Step 402: updating a network topology and a resource view according to the operation status parameter of the network node.

In some embodiments, the method further includes: receiving a first message from an application device, where the first message requests for service analysis; generating a flow table according to the first message; and sending the flow table to the network node.

In some embodiments, the first message includes one or more of the following: source end information, destination end information, data flow information, service application type and service application category identifier.

In some embodiments, the generating a flow table according to the first message, includes: identifying, by a service analysis module, a service application type of the application device according to the first message; if the service application type is an application resource, sending, by the service analysis module, a second message to a path calculation module; according to the second message, obtaining, by the path calculation module, from a topology management module, the network topology and resource view as well as reservation resources of the network node; according to the network topology and resource view as well as reservation resources of the network node, performing, by the path calculation module, path calculation, and estimation of an end-to-end delay of each path; sending, by the path calculation module, to a resource calculation module, a path set of paths less than a maximum delay of the data flow; obtaining, by the resource calculation module, from the topology management module, the network topology and resource view as well as reservation resources of the network node, performing resource estimation on the paths in the path set, and selecting paths that meet resource requirements, and sending information of the selected paths to a flow table generation module; and generating, by the flow table generation module, the flow table according to the information of the selected paths.

It is understandable that the above reservation resources are not used and occupied, and it is ensured that the reservation resources are not occupied.

In some embodiments, the method further includes: if there is no path that meets the resource requirements, notifying, by the path calculation module, the service analysis module of the above result; and feeding back, by the service analysis module, the result to the application device.

In some embodiments, the method further includes: receiving, by the service analysis module, a third message from the application device, where the third message indicates bearer cancellation and the third message carries a data flow identifier; notifying, by the service analysis module, the topology management module to release resources related to the data flow identifier, and updating the network topology and resource view; notifying, by the topology management module, the flow table generation module to delete a flow entry related to the data flow identifier.

In some embodiments, the sending, by the path calculation module, to a resource calculation module, a path set of paths less than a maximum delay of the data flow, includes: determining, by the path calculation module, the path set of paths less than the maximum delay of the data flow; determining, by the path calculation module, difference values between delay of each path in the path set and the maximum delay of the data flow; sorting, by the path calculation module, paths according to the difference values in ascending order, and sending the paths to the resource calculation module.

In some embodiments, the sending, by the service analysis module, a second message to a path calculation module, includes: according to an established service model library block, mapping, by the service analysis module, the service application category identifier to one or more of service peak packet rate, maximum data packet length, end-to-end delay upper limit, packet loss upper limit, and network bandwidth, and sending it to the path calculation module together with one or more of source end, destination end, data flow identifier, service application type, and service application category identifier.

In some embodiments of the present disclosure, through centralized control, the topology and resources of the entire network can be clearly understood and more reasonable path and resource reservation decisions can be made. Further, through the resource reservation of network node, it is ensured that the data flow will not be lost due to congestion; through copying and deleting, it is ensured that the data flow is not lost due to the link, thereby ensuring that an end-to-end packet loss rate is almost zero. Further, through resource reservation and path planning, it is ensured that a worst end-to-end delay is not less than a predetermined value. Further, through packet storage, end-to-end delay jitter is eliminated. Further, through resource reservation, a bandwidth reserved for ordinary services can achieve highly reliable services without building a dedicated network.

In the embodiments of the present disclosure, service applications can be converted into end-to-end requirements for network indicators (bandwidth, delay, jitter, packet loss) within a certain time interval, and the control device performs path calculation according to the requirements for the network indicators, and generates a flow table. Before performing path calculation, the control device uses a deterministic network resource view to integrate an original SDN network topology view and network management system, and determines reservation resources which are not used or occupied, thereby ensuring that the reservation resources are not preempted. When performing path calculation, an optimal path is a path with the smallest difference value between a required delay and a calculated delay, thereby endogenously reducing network jitter. In a path decision procedure, delay and resources on nodes in a path are comprehensively considered to ensure simultaneous effectiveness.

Referring to FIG. 5, a network system is divided into an application device, a control device and a network node. The application device has various application requirements, and puts forward the requirements for the control device through a northbound interface. The control device mainly constructs a latest network topology and resource view of the network, and performs network path planning, control, resource calculation and reservation according to the requirements of the application, and notifies a result to the application device and a network node layer. The control device includes different modules such as link discovery, topology management, service analysis, path calculation, resource management, and flow table generation. The network node is mainly responsible for classification and processing of the data flow including control requirements and guarantee of resources. The network node includes different modules such as flow identify, classification flow table, resource reservation, packet copy, packet storage and packet delete.

Operations of this system are mainly divided into four processes, including a network management process, a network control process, a resource reservation process, and a data flow processing process.

The purpose of the network management process is to collect the latest network topology and resource views of the system. The purpose of the network control process is to select a path that meets requirements according to requirements of an application, generate a flow table for the path, and send the flow table to a switch. Each calculation of the network control process requires and updates the latest network topology and resource views of the network management process. The resource reservation process is to perform, by the control device, resource reservation, with respect to resource decisions of each network node. The data flow processing process is to, after identifying the data flow, select a flow table for matching according to a level of the data flow, then set a sending timer according to a timestamp, and send the data flow to a next hop when the sending timer expires.

### Example one:

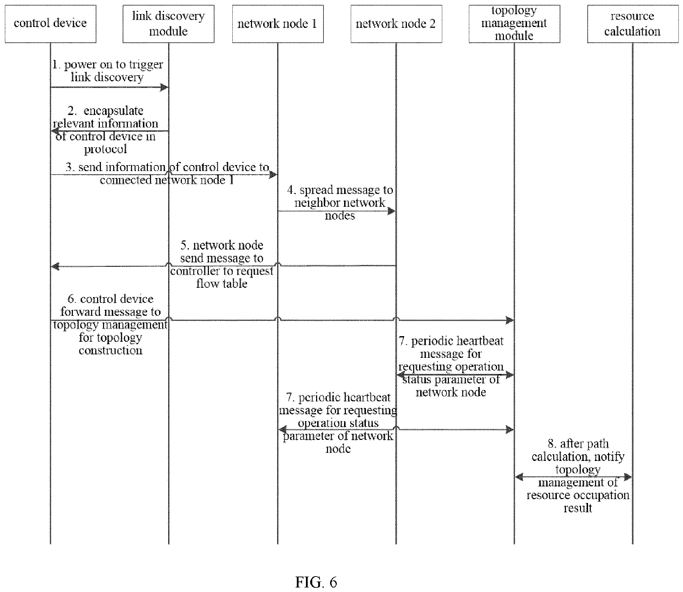

Referring to FIG. 6, it shows a network management process.
Step 1: automatically starting a link discovery module after power-on;
Step 2: a control device (or controller) uses a link layer discovery protocol (LLDP) as a link discovery protocol; the link discovery module encapsulates relevant information (such as: main capabilities, management address, device identifier, interface identifier) of the control device in the LLDP.
Step 3: the control device sends an LLDP data packet through a packet-out message, to a network node 1 (which may be understood as a network node or may be referred to as a switch) which is connected with the control device, and the network node 1 stores the packet-out message.

The function of the packet-out message is to send relevant data of the controller to an open-flow switch, and the packet-out message is a message that includes a data packet send command.

Step 4: the network node 1 spreads the message through all ports; if a neighbor network node 2 is also an open-flow forwarding node, then the network node 2 executes a flow table.

Step 5: if there is no such flow table on the network node 2, the network node 2 requests the flow table from the control device through a packet-in message. The open-flow switch continues to broadcast the packet to its neighbors. If there is a non-open-flow switch, and after traversing, the packet reaches another open-flow switch, and the another switch uploads a first packet to the control device so that the control device knows that the another switch is a non-open-flow switch, and vice versa.

The function of the packet-in message is to send data packets arriving at the open-flow switch to the controller.

The function of the packet-out message is to send relevant data of the controller to the open-flow switch, and the packet-out message is a message that includes a data packet send command.

Step 6: the control device collects the packet-in message and sends the packet-in message to the topology management module for drawing a network topology and a resource view.

Step 7: After the topology is established, periodic heartbeat message is sent to request for an operation status parameter of the switch.

**Table 1**

| Node type | operation status requirements |
|---|---|
| network device | network device ID, network device type ID, port+egress/ingress+bandwidth (inherent, allocable, for best-effort, allocated, remaining allocated)+BUFFER (inherent, allocable, for best-effort, allocated, remaining allocated) |
| network link | uplink, downlink, one-way delay, packet loss rate |
| edge data node | data source device and gate device information+port+link (which currently can only be added in static planning phase) |

Step 8: after the resource calculation is successfully matched, the above parameters are updated for next calculation.

### Example two

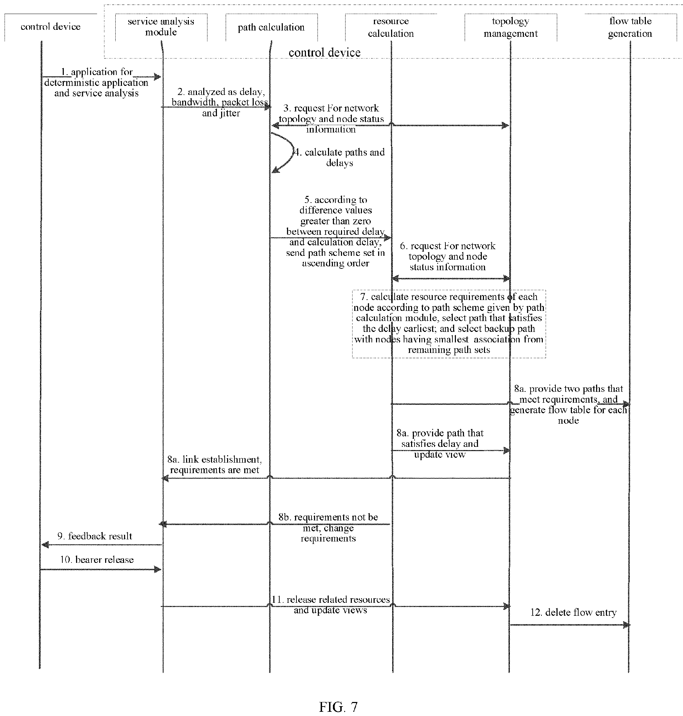

Refer to FIG. 7, it shows a network control process.

Step 1: an application device (an application layer) sends a request to a service analysis module through a northbound interface.

The request may include one or more of the following: a source end (core network entrance E-NODEB), a destination end (corresponding optional gate), a data flow ID, a service application type (open/cancel), and a service category index (corresponding to requirements).

Step 2: the service analysis module identifies a service application type; if the service application type is an application resource, according to a pre-established service model library, the service category index is mapped to service peak packet rate, maximum data packet length, end-to-end delay upper limit, packet loss upper limit, and network bandwidth, which are sent to the path calculation module together with the source end (core network entrance E-NODEB), the destination end (corresponding optional gate), the data flow ID, the service application type (open/cancel), and the service category index (corresponding to requirements).

Step 3: after receiving the request, the path calculation module obtains current topology and resource conditions from the topology management module for performing path calculation.

Step 4: according to real-time information of the topology management module, the path calculation module performs path calculation for end-to-end requirements and estimates end-to-end delay of each path.

Step 5: the path calculation module sorts paths in the path set of paths less than a maximum delay of the data flow, according to difference values in ascending order, and sends the path set of paths to the resource calculation module (parameters include: data flow ID, path ID (device ID set), end-to-end delay estimation).

Step 6: the resource calculation module reads real-time information of the topology and device from the topology management module.

Step 7: the resource calculation module performs resource estimation node by node according to a path sequence sent by the path calculation module.

A selected ID set of a first group of devices is compared with an allocable BUFFER; if all are satisfied, then outputting; if one is not satisfied, jumping out to perform comparison for devices of a next path; if there is a set of satisfying paths, a path with least degree of overlapping between nodes of the path and nodes of the set of satisfying paths, is selected as a backup path.

Step 8a: if the resource calculation module selects paths, the resource calculation module sends path information to the flow table generation module for generate a flow table, and sends the flow table to a switch device (here, in order to improve availability, an interface between the control device and the switch device follows the open-flow rules, so as to reduce modification of the device itself). Meanwhile, the resource calculation module sends a calculation result to the topology management module; the topology management module updates in real time, and sends a success message to the service analysis module.

Step 8b: if there is no path that meets the requirements, such result is notified to the service analysis module.

Step 9: the service analysis module feeds back the result to the application layer.

Step 10: if the application layer indicates bearer cancellation, the data flow ID and service application type (open/cancel) are sent to the service analysis module.

Step 11: the service analysis module notifies the topology management module to release relevant resources of the data flow.

Step 12: notifying deletion of a related flow entry of the data flow.

### Example three

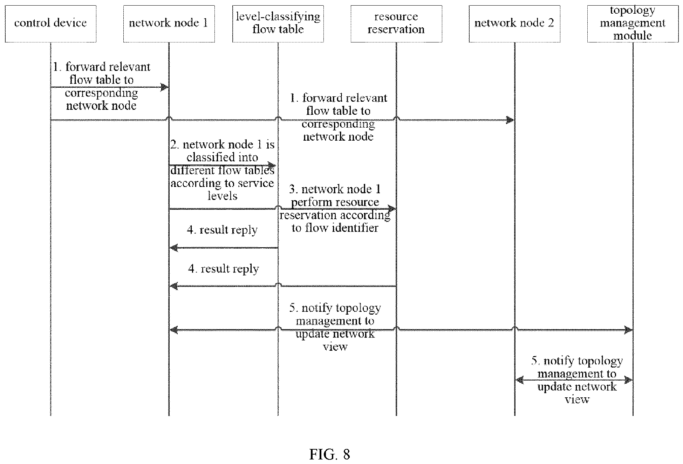

Referring to FIG. 8, it shows a resource reservation process.
Step 1: the control device sends generated flow tables to each relevant network node one by one;
Step 2: after receiving the flow table, the network node updates multi-stage flow tables according to a level of a data flow, and inserts/deletes a forwarding path of this data flow in the flow table of the relevant level.
Step 3: after the network node receives resource reservation information, the network node performs resource reservation/cancellation on the network node according to requirement.
Step 4: resource reservation and level-classifying flow table notify the network node of an execution result.
Step 5: the network node notifies the result to the topology management module of the control device, and updates the network topology and resource view.

### Example four

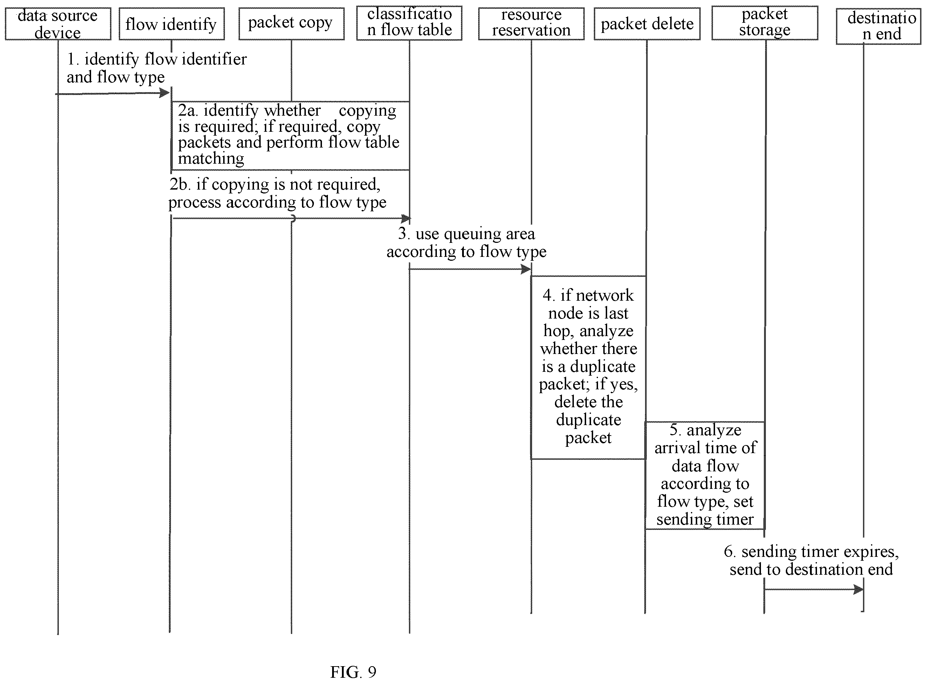

Referring to FIG. 9, it shows a data processing process.
Step 1: after a data source device starts to send a data flow, the data source device connects to a network node for analyzing a flow identifier and flow type.
Step 2a: the network node judges whether copying is required; if copying is required, copying each packet of the data flow to form two data flows, and transferring to the flow table for matching;
Step 2b: if copying is not required, directly transferring to the flow table for matching.
Step 3: selecting a flow table according to the level of the data flow and performing matching; according to the flow identifier, performing resource reservation on the device and using a buffer area;
Step 4: judging whether the network node is a last hop; if the network node is the last hop, analyzing whether there is a duplicate packet and deleting the duplicate packet;
Step 5: analyzing arrival time of the data flow according to the flow type, setting a sending timer according to a timestamp;
Step 6: if the sending timer expires, sending the data flow to a next hop.

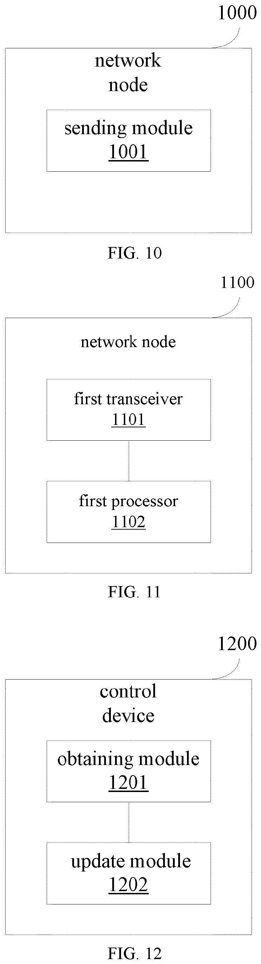

Referring to FIG. 10, one embodiment of the present disclosure provides a network node. The network node 1000 includes:
a sending module 1001 configured to send an operation status parameter of the network node to a control device, thereby enabling the control device to update a network topology and a resource view according to the operation status parameter of the network node.

The operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, or remaining allocated buffer.

In some embodiments, the sending module 1001 is further configured to send the operation status parameter of the network node to the control device through a periodic heartbeat message.

In some embodiments, the network node 1000 further includes:
a first processing module configured to, after receiving a flow table from the control device, update the flow table according to a service level of data a flow, insert or delete a forwarding path of the data flow in the flow table of a relevant level, thereby obtaining an execution result of a level-classifying flow table; and notifying the control device of the execution result of the level-classifying flow table.

In some embodiments, the network node 1000 further includes:
a second processing module configured to, after receiving resource reservation information from the control device, perform resource reservation or cancellation according to a flow identifier, thereby obtaining an execution result of the resource reservation; and notifying the control device of the execution result of resource reservation.

In some embodiments, the network node 1000 further includes:
a third processing module configured to, after receiving a data flow from a data source device, select a flow table according to a level of the data flow, and perform matching.

In some embodiments, the network node 1000 further includes:
a fourth processing module configured to, according to the flow identifier and/or flow type of the data flow, judge whether copying is required; if copying is required, copy each packet of the data flow to form a plurality of data flows, and transfer to the flow table for matching; if copying is not required, directly transfer to the flow table for matching.

In some embodiments, the network node 1000 further includes:
a fifth processing module configured to, judge whether the network node is a last hop; if the network node is the last hop, analyze whether there is a duplicate packet according to packet sequence indexes in the flow identifier, and if there is a duplicate packet, delete the duplicate packet; analyze arrival time of the data flow according to the flow type, set a sending timer according to a timestamp; if the sending timer expires, send the data flow to a next hop.

The network node provided in the embodiment of the present disclosure can execute the above method embodiment shown in FIG. 3, with similar implementation principles and technical effects, which are not described in details herein.

Referring to FIG. 11, one embodiment of the present disclosure provides a network node. The network node 1100 includes: a first transceiver 1101 and a first processor 1102.

The first transceiver 1101 sends and receives data under the control of the first processor 1102.

The first processor 1102 reads a program in a memory to execute the following operations: sending an operation status parameter of the network node to a control device, thereby enabling the control device to update a network topology and a resource view according to the operation status parameter of the network node.

Optionally, the operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, or remaining allocated buffer.

In some embodiments, the first processor 1102 reads the program in the memory to execute the following operations: sending the operation status parameter of the network node to the control device through a periodic heartbeat message.

In some embodiments, the first processor 1102 reads the program in the memory to execute the following operations: after receiving a flow table from the control device, updating the flow table according to a service level of a data flow, inserting or deleting a forwarding path of the data flow in the flow table of a relevant level, thereby obtaining an execution result of a level-classifying flow table; and notifying the control device of the execution result of the level-classifying flow table.

In some embodiments, the first processor 1102 reads the program in the memory to execute the following operations: after receiving resource reservation information from the control device, performing resource reservation or cancellation according to a flow identifier, thereby obtaining an execution result of the resource reservation; and notifying the control device of the execution result of resource reservation.

In some embodiments, the first processor 1102 reads the program in the memory to execute the following operations: after receiving a data flow from a data source device, selecting a flow table according to a level of the data flow, and performing matching.

In some embodiments, the first processor 1102 reads the program in the memory to execute the following operations: according to the flow identifier and/or flow type of the data flow, judging whether copying is required; if copying is required, copying each packet of the data flow to form a plurality of data flows, and transferring to the flow table for matching; if copying is not required, directly transferring to the flow table for matching.

In some embodiments, the first processor 1102 reads the program in the memory to execute the following operations: judging whether the network node is a last hop; if the network node is the last hop, analyzing whether there is a duplicate packet according to packet sequence indexes in the flow identifier, and if there is a duplicate packet, deleting the duplicate packet; analyzing arrival time of the data flow according to the flow type, setting a sending timer according to a timestamp; if the sending timer expires, sending the data flow to a next hop.

The network node provided in the embodiment of the present disclosure can execute the above method embodiment shown in FIG. 3, with similar implementation principles and technical effects, which are not described in details herein.

Referring to FIG. 12, one embodiment of the present disclosure provides a control device. The control device 1200 includes:
an obtaining module 1201 configured to obtain an operation status parameter of a network node;
an update module 1202 configured to update a network topology and a resource view according to the operation status parameter of the network node.

Optionally, the operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, or remaining allocated buffer.

In some embodiments, the obtaining module 1201 is further configured to receive a periodic heartbeat message sent by the network node, where the periodic heartbeat message carries the operation status parameter of the network node.

In some embodiments, the control device 1200 further includes:
a sixth processing module configured to receive a first message from an application device, where the first message requests for service analysis; generate a flow table according to the first message; and send the flow table to the network node.

In some embodiments, the first message includes one or more of the following: source end information, destination end information, data flow information, service application type and service application category identifier.

In some embodiments, the control device 1200 further includes: a service analysis module, a path calculation module, a resource calculation module, a topology management module, and a flow table generation module.

The service analysis module identifies a service application type of the application device according to the first message; if the service application type is an application resource, the service analysis module sends a second message to a path calculation module. According to the second message, the path calculation module obtains, from the topology management module, the network topology and resource view as well as reservation resources of the network node. According to the network topology and resource view as well as reservation resources of the network node, the path calculation module performs path calculation, and estimation of an end-to-end delay of each path. The path calculation module sends, to the resource calculation module, a path set of paths less than a maximum delay of the data flow. The resource calculation module obtains, from the topology management module, the network topology and resource view as well as reservation resources of the network node, performs resource estimation on the paths in the path set, and selects paths that meet resource requirements, and sends information of the selected paths to the flow table generation module. The flow table generation module generates the flow table according to the information of the selected paths.

In some embodiments, if there is no path that meets the resource requirements, the path calculation module notifies the service analysis module of the above result, and the service analysis module feeds back the result to the application device.

In some embodiments, the service analysis module receives a third message from the application device, where the third message indicates bearer cancellation and the third message carries a data flow identifier.

The service analysis module notifies the topology management module to release resources related to the data flow identifier, and updates the network topology and resource view.

The topology management module notifies the flow table generation module to delete a flow entry related to the data flow identifier.

In some embodiments, the path calculation module determines a path set of paths less than the maximum delay of the data flow.

The path calculation module determines difference values between delay of each path in the path set and the maximum delay of the data flow.

The path calculation module sorts paths according to the difference values in ascending order, and sends the paths to the resource calculation module.

In some embodiments, according to an established service model library block, the service analysis module maps the service application category identifier to one or more of service peak packet rate, maximum data packet length, end-to-end delay upper limit, packet loss upper limit, and network bandwidth, and sends it to the path calculation module together with one or more of source end, destination end, data flow identifier, service application type, and service application category identifier.

The control device provided in the embodiment of the present disclosure can execute the above method embodiment shown in FIG. 4, with similar implementation principles and technical effects, which are not described in details herein.

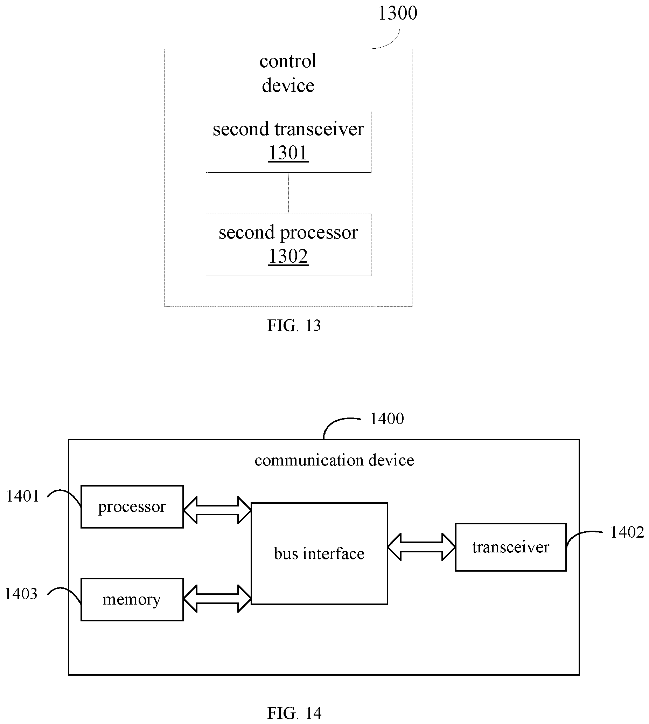

Referring to FIG. 13, one embodiment of the present disclosure provides a control device. The control device 1300 includes a second transceiver 1301 and a second processor 1302.

The second transceiver 1301 sends and receives data under the control of the second processor 1302.

The second processor 1302 reads a program in a memory to execute the following operations: obtaining an operation status parameter of a network node; and updating a network topology and a resource view according to the operation status parameter of the network node.

Optionally, the operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, or remaining allocated buffer.

In some embodiments, the second processor 1302 reads the program in the memory to execute the following operations: receiving a periodic heartbeat message sent by the network node, where the periodic heartbeat message carries the operation status parameter of the network node.

In some embodiments, the second processor 1302 reads the program in the memory to execute the following operations: receiving a first message from an application device, where the first message requests for service analysis; generating a flow table according to the first message; and sending the flow table to the network node.

In some embodiments, the first message includes one or more of the following: source end information, destination end information, data flow information, service application type and service application category identifier.

In some embodiments, the second processor 1302 reads the program in the memory to execute the following operations: identifying a service application type of the application device according to the first message; if the service application type is an application resource, sending, by the service analysis module, a second message to a path calculation module; according to the second message, obtaining, by the path calculation module, from a topology management module, the network topology and resource view as well as reservation resources of the network node; according to the network topology and resource view as well as reservation resources of the network node, performing, by the path calculation module, path calculation, and estimation of an end-to-end delay of each path; sending, by the path calculation module, to a resource calculation module, a path set of paths less than a maximum delay of the data flow; obtaining, by the resource calculation module, from the topology management module, the network topology and resource view as well as reservation resources of the network node, performing resource estimation on the paths in the path set, and selecting paths that meet resource requirements, and sending information of the selected paths to a flow table generation module; and generating, by the flow table generation module, the flow table according to the information of the selected paths.

In some embodiments, the second processor 1302 reads the program in the memory to execute the following operations: if there is no path that meets the resource requirements, notifying, by the path calculation module, the service analysis module of the above result; and feeding back, by the service analysis module, the result to the application device.

In some embodiments, the second processor 1302 reads the program in the memory to execute the following operations: receiving, by the service analysis module, a third message from the application device, where the third message indicates bearer cancellation and the third message carries a data flow identifier; notifying, by the service analysis module, the topology management module to release resources related to the data flow identifier, and updating the network topology and resource view; notifying, by the topology management module, the flow table generation module to delete a flow entry related to the data flow identifier.

In some embodiments, the second processor 1302 reads the program in the memory to execute the following operations: determining, by the path calculation module, the path set of paths less than the maximum delay of the data flow; determining, by the path calculation module, difference values between delay of each path in the path set and the maximum delay of the data flow; sorting, by the path calculation module, paths according to the difference values in ascending order, and sending the paths to the resource calculation module.

In some embodiments, the second processor 1302 reads the program in the memory to execute the following operations: according to an established service model library block, mapping, by the service analysis module, the service application category identifier to one or more of service peak packet rate, maximum data packet length, end-to-end delay upper limit, packet loss upper limit, and network bandwidth, and sending it to the path calculation module together with one or more of source end, destination end, data flow identifier, service application type, and service application category identifier.

The control device provided in the embodiment of the present disclosure can execute the above method embodiment shown in FIG. 4, with similar implementation principles and technical effects, which are not described in details herein.

Referring to FIG. 14, FIG. 14 is a schematic diagram of a communication device according to an embodiment of the present disclosure. As shown in FIG. 14, the communication device 1400 includes: a processor 1401, a transceiver 1402, a memory 1403, and a bus interface.

In one embodiment of the present disclosure, the communication device 1400 further includes: a computer program stored on the memory 1403 and executable on the processor 1401. The processor 1401 executes the computer program to implement steps in the embodiments shown in FIG. 3 and FIG. 4.

In FIG. 13, the bus architecture may include any number of interconnected bus and bridge. Specifically, various circuits of one or more processors, which are represented by the processor 1401, and one or more memories, which are represented by the memory 1403, are linked together. The bus architecture may link various other circuits, such as a peripheral device, voltage regulator and a power management circuit together. These features are well known in this field; therefore, this disclosure does not make further description on these features. The bus interface provides an interface. The transceiver 1402 may be multiple elements, including a transmitter and a receiver and provide units, which communicate with other devices on the transmission medium. It is understood that the transceiver 1402 is an optional component.

The processor 1401 is responsible for managing the bus architecture and the normal processing. The memory 1403 may be used to store data used by the processor 1401 for performing operations.

The communication device provided in the embodiment of the present disclosure can execute the method embodiments shown in FIG. 3 to FIG. 4, with similar implementation principles and technical effects, which are not described in details herein.

The steps of the method or algorithm described in connection with the disclosure of the present disclosure may be implemented in a hardware manner, or may be implemented in a manner in which a processor executes software instructions. The software instructions may be composed of corresponding software modules, and the software modules may be stored in RAM, flash memory, ROM, EPROM, EEPROM, registers, hard disks, mobile hard disks, read-only optical disks, or any other form of storage medium known in the art. An exemplary storage medium is coupled to the processor, so that the processor can read information from the storage medium and can write information to the storage medium. Of course, the storage medium may also be an integral part of the processor. The processor and the storage medium may be located in an ASIC. In addition, the ASIC may be located in a core network interface device. Of course, the processor and the storage medium may also exist as discrete components in the core network interface device.

Those skilled in the art should be aware that in one or more of the above examples, the functions described in the present disclosure may be implemented by hardware, software, firmware, or any combination thereof. When implemented by software, these functions may be stored in a computer-readable medium or transmitted as one or more instructions or codes on the computer-readable medium. The computer-readable medium includes a computer storage medium and a communication medium. The communication medium includes any medium that facilitates the transfer of a computer program from one place to another. The storage medium may be any available medium that can be accessed by a general-purpose or special-purpose computer.

The specific embodiments described above further describe the purpose, technical solutions, and beneficial effects of the present disclosure in details. It should be understood that the above descriptions are only specific embodiments of the present disclosure, and are not intended to limit protection scope of the present disclosure. Any modification, equivalent replacement, improvement made on the basis of the technical solution of the present disclosure shall be included in the protection scope of the present disclosure.

Those skilled in the art should understand that the embodiments of the present disclosure may be provided as a method, a system, or a computer program product. Therefore, the embodiments of the present disclosure may adopt the form of a complete hardware embodiment, a complete software embodiment, or an embodiment combining software and hardware. Moreover, the embodiments of the present disclosure may adopt the form of a computer program product implemented on one or more computer-usable storage media (including but not limited to disk storage, CD-ROM, optical storage, etc.) containing computer-usable program codes.

The embodiments of the present disclosure are described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer program instructions. These computer program instructions may be provided to a processor of a general-purpose computer, a special-purpose computer, an embedded processor, or other programmable data processing device to generate a machine, so that the instructions executed by the processor of the computer or other programmable data processing device form a device that implements the functions specified in one process or multiple processes in the flowchart and/or one block or multiple blocks in the block diagram.

These computer program instructions may also be stored in a computer-readable memory that can direct a computer or other programmable data processing device to operate in a specific manner, so that the instructions stored in the computer-readable memory produce an article including an instruction device. The instruction device implements the functions specified in one process or multiple processes in the flowchart and/or one block or multiple blocks in the block diagram.

These computer program instructions may also be loaded on a computer or other programmable data processing device, so that a series of operation steps are executed on the computer or other programmable device to produce computer-implemented processing, so that instructions executed on the computer or other programmable device provide steps for implementing functions specified in one process or multiple processes in the flowchart and/or one block or multiple blocks in the block diagram.

It should be noted that it should be understood that the above division of various modules is only a division of logical functions; and these modules may be fully or partially integrated into a physical entity in actual implementation, or may be physically separated. These modules may all be implemented in the form of calling software by processing elements; these modules may also be implemented in the form of hardware; part of the modules may be implemented in the form of calling software by processing elements, and some of the modules may be implemented in the form of hardware. For example, a determining module may be a separately disposed processing element, or may be integrated into a certain chip of the above-mentioned device for implementation. In addition, the determining module may also be stored in the memory of the above-mentioned device in the form of program codes, which are called and executed by a certain processing element of the above-mentioned device to implement the function of the determining module. The implementation of other modules is similar. In addition, all or part of these modules may be integrated together or implemented independently. The processing element described here may be an integrated circuit with signal processing capability. In the implementation process, each step of the above method or each of the above modules may be completed by an integrated logic circuit of hardware in the processor element or instructions in the form of software.

For example, each module, unit, sub-unit or sub-module may be one or more integrated circuits configured to implement the above method, for example: one or more application specific integrated circuits (ASIC), or one or more digital signal processors (DSP), or, one or more field programmable gate arrays (FPGA), etc. For another example, when one of the above modules is implemented in the form of program codes called by the processing element, the processing element may be a general-purpose processor, such as a central processing unit (CPU) or other processors that can call program codes. For another example, these modules may be integrated together and implemented in the form of a system-on-a-chip (SOC).

The terms "first", "second", etc. in the specification and claims of the present disclosure are used to distinguish similar objects, and not necessarily used to describe a specific sequence or order. It should be understood that data used in this way may be interchanged under appropriate circumstances so that the embodiments of the present disclosure described herein, for example, may be implemented in a sequence other than those illustrated or described herein. In addition, the terms "including" and "having" and any variations of them are intended to cover non-exclusive inclusions. For example, a process, method, system, product, or device that includes a series of steps or units is not necessarily limited to those clearly listed, but may include steps or units not expressly listed or other steps or units inherent to the process, method, product or device. In addition, "and/or" used in the specification and claims of the present disclosure means at least one of connected objects, for example, A and/or B and/or C, which means that there are 7 situations, i.e., including A alone, including B alone, including C alone, including both A and B, including both B and C, including both A and C, and including all of A, B, and C. Similarly, "at least one of A and B" used in the specification and claims should be understood as "A alone, B alone, or both A and B exist".

Obviously, those skilled in the art may make various changes and modifications to the embodiments of the present disclosure without departing from the spirit and scope of the present disclosure. In this way, if these modifications and variations of the embodiments of the present disclosure fall within the scope of the claims of the present disclosure and their equivalent technologies, the present disclosure is also intended to include these modifications and variations.

## Claims

1. A network control method, performed by a network node, comprising:
sending an operation status parameter of the network node to a control device, thereby enabling the control device to update a network topology and a resource view according to the operation status parameter of the network node.

2. The method according to claim 1, wherein the operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, and remaining allocated buffer.

3. The method according to claim 1, wherein the sending an operation status parameter of the network node to a control device, includes: sending the operation status parameter of the network node to the control device through a periodic heartbeat message.

4. The method according to claim 1, wherein the method further includes:
after receiving a flow table from the control device, updating the flow table according to a service level of a data flow, inserting or deleting a forwarding path of the data flow in the flow table of a relevant level, thereby obtaining an execution result of a level-classifying flow table; and
notifying the control device of the execution result of the level-classifying flow table.

5. The method according to claim 1, wherein the method further includes:
after receiving resource reservation information from the control device, performing resource reservation or cancellation according to a flow identifier, thereby obtaining an execution result of the resource reservation; and
notifying the control device of the execution result of resource reservation.

6. The method according to any one of claims 1 to 5, wherein the method further includes:
after receiving a data flow from a data source device, selecting a flow table according to a level of the data flow, and performing matching; and
performing resource reservation at the network node, according to a flow identifier of the data flow.

7. The method according to claim 6, wherein before the selecting a flow table according to a level of the data flow, and performing matching, the method further includes:
according to the flow identifier and/or flow type of the data flow, judging whether copying is required;
if copying is required, copying each packet of the data flow to form a plurality of data flows, and transferring to the flow table for matching;
if copying is not required, directly transferring to the flow table for matching.

8. The method according to claim 6 or 7, wherein the method further includes:
judging whether the network node is a last hop;
if the network node is the last hop, analyzing whether there is a duplicate packet according to packet sequence indexes in the flow identifier, and if there is a duplicate packet, deleting the duplicate packet;
analyzing arrival time of the data flow according to the flow type, setting a sending timer according to a timestamp;
if the sending timer expires, sending the data flow to a next hop.

9. A network control method, performed by a control device, comprising:
obtaining an operation status parameter of a network node; and
updating a network topology and a resource view according to the operation status parameter of the network node.

10. The method according to claim 9, wherein the operation status parameter includes one or more of the following: network device type, inherent bandwidth, allocable bandwidth, best-effort bandwidth, allocated bandwidth, remaining allocated bandwidth, inherent buffer, allocable buffer, best-effort buffer, allocated buffer, and remaining allocated buffer.

11. The method according to claim 9, wherein the obtaining an operation status parameter of a network node, includes: receiving a periodic heartbeat message sent by the network node, wherein the periodic heartbeat message carries the operation status parameter of the network node.

12. The method according to claim 9, wherein the method further includes:
receiving a first message from an application device, wherein the first message requests for service analysis;
generating a flow table according to the first message; and
sending the flow table to the network node.

13. The method according to claim 12, wherein the first message includes one or more of the following: source end information, destination end information, data flow information, service application type and service application category identifier.

14. The method according to claim 12, wherein the generating a flow table according to the first message, includes:
identifying, by a service analysis module, a service application type of the application device according to the first message;
if the service application type is an application resource, sending, by the service analysis module, a second message to a path calculation module;
according to the second message, obtaining, by the path calculation module, from a topology management module, the network topology and resource view as well as reservation resources of the network node;
according to the network topology and resource view as well as reservation resources of the network node, performing, by the path calculation module, path calculation, and estimation of an end-to-end delay of each path;
sending, by the path calculation module, to a resource calculation module, a path set of paths less than a maximum delay of the data flow;
obtaining, by the resource calculation module, from the topology management module, the network topology and resource view as well as reservation resources of the network node, performing resource estimation on the paths in the path set, and selecting paths that meet resource requirements, and sending information of the selected paths to a flow table generation module; and
generating, by the flow table generation module, the flow table according to the information of the selected paths.

15. The method according to claim 14, wherein the method further includes:
if there is no path that meets the resource requirements, notifying, by the path calculation module, the service analysis module of a result that there is no path that meets the resource requirements; and
feeding back, by the service analysis module, the result to the application device.

16. The method according to claim 15, wherein the method further includes:
receiving, by the service analysis module, a third message from the application device, wherein the third message indicates bearer cancellation and the third message carries a data flow identifier;
notifying, by the service analysis module, the topology management module to release resources related to the data flow identifier, and updating the network topology and resource view;
notifying, by the topology management module, the flow table generation module to delete a flow entry related to the data flow identifier.

17. The method according to claim 14, wherein the sending, by the path calculation module, to a resource calculation module, a path set of paths less than a maximum delay of the data flow, includes:
determining, by the path calculation module, the path set of paths less than the maximum delay of the data flow;
determining, by the path calculation module, difference values between delay of each path in the path set and the maximum delay of the data flow;
sorting, by the path calculation module, paths according to the difference values in ascending order, and sending the paths to the resource calculation module.

18. The method according to claim 17, wherein the sending, by the service analysis module, a second message to a path calculation module, includes:
according to an established service model library block, mapping, by the service analysis module, the service application category identifier to one or more of service peak packet rate, maximum data packet length, end-to-end delay upper limit, packet loss upper limit, and network bandwidth, which are sent to the path calculation module together with one or more of source end, destination end, data flow identifier, service application type, and service application category identifier.

19. A network node, comprising:
a sending module configured to send an operation status parameter of the network node to a control device, thereby enabling the control device to update a network topology and a resource view according to the operation status parameter of the network node.

20. A network node, comprising: a first transceiver and a first processor; wherein the first transceiver sends and receives data under the control of the first processor;
the first processor reads a program in a memory to execute following operations: sending an operation status parameter of the network node to a control device, thereby enabling the control device to update a network topology and a resource view according to the operation status parameter of the network node.

21. A control device, comprising:
an obtaining module configured to obtain an operation status parameter of a network node; and
an update module configured to update a network topology and a resource view according to the operation status parameter of the network node.

22. A control device, comprising: a second transceiver and a second processor; wherein the second transceiver sends and receives data under the control of the second processor;
the second processor reads a program in a memory to execute following operations: obtaining an operation status parameter of a network node; and updating a network topology and a resource view according to the operation status parameter of the network node.

23. A communication device, comprising: a processor, a memory, and a program stored on the memory and executable on the processor; wherein the processor executes the program to perform steps of the method according to any one of claims 1 to 18.

24. A computer-readable storage medium, comprising a program stored thereon; wherein the program is executed by a processor to perform steps of the method according to any one of claims 1 to 18.
